Europäisches Patentamt

European Patent Office

Office européen des brevets

(11) Numéro de publication: **0 232 669**
**A1**

## (12) DEMANDE DE BREVET EUROPEEN

(21) Numéro de dépôt: **86440106.2**

(22) Date de dépôt: **04.12.86**

(51) Int. Cl.⁴: **A 01 G 9/10,** C 05 F 11/04,
A 01 G 1/02

---

(30) Priorité: **06.12.85 FR 8518450**

(43) Date de publication de la demande: **19.08.87**
**Bulletin 87/34**

(84) Etats contractants désignés: **AT BE CH DE ES FR GB GR
IT LI LU NL SE**

(71) Demandeur: **Société en nom Collectif HUMIVER
SOUFFLET - COLAU - BOUTELEUX & Cie, 104 Avenue de
Paris Proville, F-59400 Cambrai (Nord) (FR)**

(72) Inventeur: **Soufflet, Roger, 5 rue de la Marlière,
F-59400 Sailly-lez-Cambrai§Nord (FR)**
Inventeur: **Colau, Richard, 8 rue de la Mairie,
F-59400 Cauroir Nord (FR)**
Inventeur: **Bouteleux, Armand, 9 rue des Tisserands,
F-59400 Raillencourt Sainte Olle Nord (FR)**

(74) Mandataire: **Lepage, Jean-Pierre, Cabinet Lepage &
Aubertin Innovations et Prestations 23/25, rue Nicolas
Leblanc B.P. 1069, F-59011 Lille Cédex 1 (Nord) (FR)**

---

(54) **Support de culture complexe et procédés de culture mettant en oeuvre le dit support de culture complexe.**

(57)    L'invention est relative à un support de culture complexe,
notamment destiné, en tant que tel ou en amendement incorporé au sol, à la culture de plantes, fleurs, légumes, arbres fruitiers, arbres d'ornement, ainsi qu'à différents procédés de culture utilisant le dit complexe.

Selon l'invention, le support de culture se présente sous
la forme d'un complexe organique aéré et homogène constitué
à partir d'un mélange homogène de déchets de végétaux non
fertilisés et d'un amendement fertilisant organique tel que le
lombricompost.

Par ailleurs, le support de culture est avantageusement,
en outre, utilisé dans des procédés de culture notamment destinés aux «légumes blancs» tels que notamment endives, asperges ou encore pour favoriser la reprise du cycle nutritif de
végétaux lors de leur repiquage ou de leur transplantation.

-1-

L'invention est relative a un support de culture complexe ainsi qu'à des procedes de culture mettant en oeuvre le dit support de culture complexe.

L'invention trouvera notamment son application dans le domaine agricole en géneral, et sera notamment destinee a la culture de plantes, fleurs, legumes, arbres fruitiers, arbres d'ornement, et similaires. De plus, le procédé de la présente invention pourra s'appliquer à une culture particuliere de légumes, dits "produits blancs", à savoir les endives, les pissenlits, les asperges.

Dans les procédés de culture traditionnelle, il est courant tout d'abord de cultiver des jeunes plants, obtenus soit par exemple par semis ou encore par bouturages. Cette premiere croissance s'effectue généralement sous abri avec un maximum de soin pour favoriser le développement du sujet.

A la suite de cette premiere période, les différents sujets vegétaux, qu'il s'agisse de fleurs, de plantes, d'arbustes ou de légumes, sont ensuite, soit repiqués, soit transplantés à même le sol en pleine terre dans des champs ou dans des jardins.

Pour ce, il y a lieu préalablement de préparer la terre et de l'ameublir pour favoriser la reprise du cycle végétatif. Toutefois, il est genéralement constaté un effet de choc pour le sujet végétal au moment de son repiquage ou de sa transplantation qui vient du fait que les radicelles doivent s'accrocher au milieu de culture, ce qui suspend pendant ce temps le cycle nutritif du sujet considéré.

Par ailleurs, il est courant d'utiliser dans les modes de cultures modernes, des engrais chimiques pour favoriser le développement des radicelles et pour augmenter la nutrition des végétaux.

Toutefois, il est à remarquer que ces engrais chimiques sont couteux et polluants pour l'environnement et de plus quoique facilement acceptés par le consommateur pour traiter des plantes ou des arbres d'ornement, ceux-ci sont plus mal acceptés lorsqu'il s'agit de légumes consommables car ils ne sont pas naturels.

En outre, certains légumes nécessitent un type de culture particulier, c'est le cas notamment des "produits blancs" tels que notamment les endives ou les asperges, qui demandent un développement à l'abri de la lumière pour éviter qu'ils verdissent.

Depuis quelques années, pour cultiver de telles legumes, telles que notamment les endives, on utilise un type de culture appelé généralement culture hydroponique qui consiste en un processus de maturation des racines en l'absence de terre ou de support de culture.

Selon les procédes de culture hydroponique connus, après arrachage, les racines sont placées dans des bacs remplis d'un liquide nutritif généralement formé par un mélange d'eau naturelle et d'engrais chimique. Ainsi, au moins une partie de la racine est immergée dans le liquide nutritif et favorise le développement des radicelles.

De plus, ce type de culture hydroponique est pratiqué dans des salles obscures tempérées pour créer un double climat au niveau de la racine. Plus précisément, le liquide nutritif est légèrement plus chaud que l'air ambiant de la salle pour favoriser le développement des radicelles d'une part et d'autre part pour obtenir des endives bien blanches et bien serrées.

Toutefois, il est à remarquer que le liquide nutritif est constitué par un mélange d'eau et d'engrais chimique dont les inconvénients ont été rappelés ci-dessus. Par ailleurs, il est nécessaire d'effectuer des arrosages très fréquents plusieurs fois par jour et même, selon certains cas, de prévoir une circulation permanente de liquide nutritif.

De tels procédes de culture hydroponique penalisent sensiblement le coût de revient de la culture et de plus, dans certains cas, ont une mauvaise réputation auprès du consommateur du fait que l'on utilise en masses des engrais chimiques.

Par ailleurs, il est également connu de tels procédés de culture de "légumes blancs" qui sont mis en oeuvre en pleine terre mais en utilisant un support de culture neutre, plus aéré que la terre, formé à partir de tourbe, sable, et autres matières expansées naturelles ou synthétiques. Toutefois, pour favoriser la nourriture des légumes cultivés, on utilise un arrosage temporaire et périodique d'une solution riche en engrais chimiques.

Ce procédé particulier présente plusieurs inconvénients, à savoir il met en oeuvre des engrais chimiques coûteux, polluants, de mauvaise réputation auprès des consommateurs, et de plus, le rendement de l'amendement n'est pas maximum car à chaque arrosage, le

support de culture est "lavé", l'engrais chimique ne se fixant pas au dit support.

Par ailleurs, on connait également depuis quelques années, des amendements organiques fertilisants tels que le lombricompost, qui est un produit organique élaboré à partir de fumier de ferme chauffé naturellement par compostage, puis soumis à l'action de vers lombrics, notamment dits rouges californiens, pour la transformation mécanique et bactérienne du fumier.

En effet, les vers lombrics digèrent la matière et on récupère la déjection des vers qui est effectivement une matière possédant des éléments fertilisants favorisant la culture.

Particulièrement, le lombricompost contient en outre du carbone organique, des matières organiques, de l'azote, du calcaire, du calcium, du magnésium, du potassium, du sodium, de l'acide phosphorique, différents chlorures solubles.

Généralement, le lombricompost, ainsi obtenu, est broyé pour le réduire en poudre, puis utilisé pour favoriser le développement des plantes vertes et des fleurs. A ce sujet, le lombricompost en poudre pure est saupoudré au-dessus de la surface de culture des plantes, puis pénètre dans le milieu grâce à des arrosages abondants successifs.

Un des buts de la présente invention est de proposer un support de culture complexe, notamment destiné, en tant que tel ou en amendement incorporé au sol, à la culture de plantes, fleurs, légumes, arbres fruitiers, arbres d'ornement ou similaires, qui permette de favoriser la culture en général de tels sujets végétaux d'une manière naturelle, en évitant les apports d'engrais chimiques, tout en autorisant des rendements de qualité et de production équivalents si pas supérieurs.

Un autre but de la présente invention est de proposer différents procédés de culture de végétaux mettant en oeuvre le support de culture complexe de la présente invention qui puisse s'appliquer aux différents types de culture, notamment au repiquage ou à la transplantation de divers sujets végétaux, ainsi qu'au forçage en salles de racines de "légumes blancs" tels qu'endives, pissenlits, asperges.

Ainsi, ces procédés permettent par des moyens naturels la culture en reprenant les avantages des procédés traditionnels et en évitant notamment les inconvénients de l'utilisation d'engrais chimiques tout en ayant des résultats similaires voire même supérieurs.

Un des buts de la présente invention est de proposer un procédé de culture, notamment destiné à favoriser la reprise du cycle nutritif de végétaux tels que plantes, arbustes ou similaires, lors de leur repiquage ou de leur transplantation en pleine terre en évitant le choc de transplantation créé par la désadaptation des radicelles au nouveau milieu de culture. En effet, le procédé de l'invention permet de faciliter l'accrochage au nouveau milieu de culture des radicelles et par suite une reprise du cycle nutritif précoce.

Un autre but de la présente invention est de proposer un procédé de culture de légumes appelés "légumes blancs" tels que les endives, les pissenlits, les asperges, qui permette le forçage des légumes en salles par des moyens naturels permettant des taux de production et des rendements de qualité élevés.

Ainsi, en mettant en oeuvre le procédé de l'invention, on force la maturation des racines qui, à l'inverse des procédés de culture hydroponique connus, ne nécessite pas l'utilisation continue de liquide nutritif chimique mais par contre utilise un support de culture substantiel solide naturel et des arrosages contrôlés avec de l'eau naturelle uniquement.

D'autres buts et avantages de la présente invention apparaîtront au cours de la description qui va suivre qui n'est cependant donnée qu'à titre indicatif et qui n'a pas pour but de la limiter.

Selon la présente invention, le support de culture complexe, notamment destiné, en tant que tel ou en amendement incorporé au sol, à la culture de plantes, fleurs, arbres fruitiers, arbres d'ornement, ou similaires, est caractérisé par le fait qu'il se présente sous la forme d'un complexe organique aéré et homogène, constitué à partir d'un mélange homogène de déchets de végétaux non fertilisés et d'un amendement fertilisant organique tel que le lombricompost.

Par ailleurs, le procédé de culture mettant en oeuvre le support de culture complexe de la présente invention, est caractérisé par le fait que :

- on constitue un milieu de culture, au moins en partie, a partir du dit support de culture,

- on répartit au moins les extrémités inférieures des racines des produits a cultiver en contact avec le dit support de culture,

- on maintient le support de culture humide, par arrosage temporaire périodique et controlé avec de l'eau naturelle.

La présente invention sera mieux comprise à la lecture de la description qui va suivre et du dessin annexé qui en fait partie intégrante.

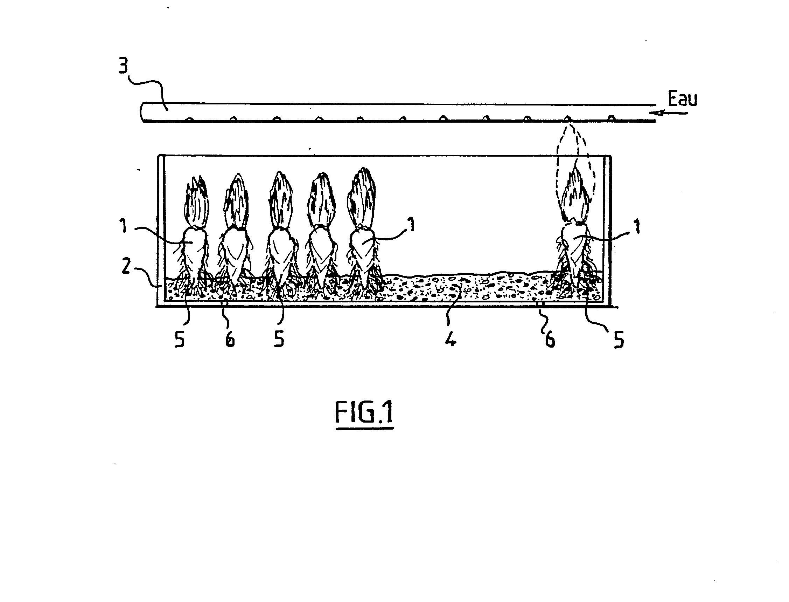

La figure 1 montre une vue schematique en coupe d'un type d'installation permettant par exemple la mise en oeuvre du procédé de culture de "légumes blancs" selon la présente invention.

La présente invention vise tout d'abord un support de culture complexe, notamment destiné en tant que tel ou en amendement incorporé au sol, à la culture de végétaux divers tels que plantes, fleurs, légumes, arbres fruitiers, arbres d'ornement, ou similaires.

A cet égard, selon l'invention, on constitue le support de culture sous la forme d'un complexe organique aéré et homogène, constitué à partir d'un mélange homogène de déchets de végétaux non fertilisés et d'un amendement organique fertilisant tel que le lombricompost.

Il est a rappeler que le lombricompost est un fertilisant organique trés intéressant car c'est un engrais complet, obtenu comme précité ci-dessus, par transformation mecanique et bactérienne des vers lombrics, qui présente tous les composants essentiels necessaires à la culture végétale en général, tel que du carbone organique, des matiéres organiques, de l'azote, du calcaire, du calcium, du magnésium, du potassium, du sodium, de l'acide phosphorique, et des chlorures solubles.

De plus, par rapport aux engrais chimiques, il est produit naturellement et présente l'énorme avantage de ne pas etre "lessivable", c'est-à-dire qu'une fois mis en place dans un support de culture, il ne descend pas emporté par les arrosages successifs, au contraire, il reste en place et continue à constituer la substance nutritive des racines.

C'est pourquoi il est important de realiser un mélange homogène pour répartir parfaitement l'amendement organique dans le support de culture complexe. A cet effet, il est connu de l'Homme de l'Art des malaxeurs qui permettront de réaliser cette homogénéité et on effectuera préférentiellement le mélange dans des malaxeurs horizontaux, aptes a répartir de façon homogène dans la masse du mélange 2 % d'un produit sur l'ensemble total du mélange.

Selon un mode préférentiel de l'invention, on fertilise le support de culture par un amendement organique de 2 à 7 litres de lombricompost pour un mélange total de 25 litres.

Dans un premier mode de réalisation de l'invention, pour constituer le support de culture complexe, on mélange de façon homogène au moins de la tourbe blonde neutre et l'amendement organique tel que le lombricompost.

Selon un autre mode de réalisation de l'invention, le support de culture complexe peut être constitué par au moins un mélange homogène de déchets résineux pulvérisés neutres, commercialement connus sous la marque "altilex", et de lombricompost.

De plus, il est avantageux, pour obtenir un mélange homogène aéré, mais de compacité suffisante pour fixer le lombricompost dans le mélange, de réaliser ce mélange à partir de différents produits de base neutres non fertilisés qui présenteront des qualités et des dimensions de particules différentes.

Par exemple, on pourra constituer le support de culture complexe par au moins un mélange homogène de tourbe blonde neutre et de déchets résineux pulvérisés neutres auquel on ajoutera le lombricompost.

Enfin, dans certains cas, pour parfaire le mélange et pour augmenter encore sa compacité, on ajoutera au mélange des déchets de végétaux sous forme pulvérulente tels que de la tourbe brune neutre et/ou du terreau neutre.

Ainsi, en constituant le mélange de telle sorte, on obtiendra un support de culture présentant des particules de qualités et de dimensions complémentaires autorisant une bonne aération du support, une bonne compacité et une bonne fixation de l'amendement organique.

De plus, le support de culture présentera les avantages des amendements organiques en ce sens qu'il sera naturel, traditionnel, non chimique et donc non polluant. De tels avantages sont favorables vis-à-vis du consommateur qui est très sensible à cet aspect.

A titre d'exemple non limitatif, un support de culture complexe donnant de bons resultats, est composé pour un mélange total de 25 litres, à partir de :

- 10 à 23 litres de tourbe blonde neutre,
- 0 à 5 litres de tourbe brune neutre,
- 0 a 5 litres de déchets resineux neutres,
- 0 à 5 litres de terreau neutre,
- 2 à 7 litres de lombricompost.

Les compositions précises du support de culture seront adaptées dans ses quantités et selon les besoins, l'addition de tous les composants formant un mélange total de 25 litres.

Plus précisément, on retiendra comme mélange optimum tant sur le plan qualité que sur le plan économique, un support de culture composé de 60 à 90 % de tourbe blonde, de 3 à 4,5 % de tourbe brune, de 3 à 4,5 % de déchets résineux, de 2 à 3 % de terreau, et de 12 à 18 % de lombricompost, la somme des différents composants appropriés donnant 100 %.

Toutefois, d'autres proportions, dans la composition du support de culture complexe selon l'invention, pourraient être utilisées sans pour autant sortir du cadre de celle-ci.

La présente invention concerne également un procédé de culture mettant en oeuvre le support de culture complexe tel qu'il vient d'être décrit.

D'une manière générale, le procédé comportera les étapes essentielles suivantes :

- on constitue un milieu de culture, au moins en partie, à partir du dit support de culture complexe organique aéré et homogène,
- on répartit au moins les extrémités inférieures des racines des produits à cultiver en contact avec le dit support de culture,
- on maintient le support de culture humide, par arrosages temporaires périodiques et contrôlés avec de l'eau naturelle.

Ce procédé de culture pourra s'adapter à tous types de végétation, à savoir : aux plantes, fleurs, légumes, arbres fruitiers, arbres d'ornement, et similaires, ainsi qu'à tous types de culture à savoir la germination des graines, le bouturage, le repiquage, la transplantation et même à la culture de certains produits spécifiques dits "légumes blancs".

-8-

En ce qui concerne la germination et le bouturage, on pratiquera de la même manière que traditionnellement à la différence qu'on utilisera le support de culture complexe amendé organiquement ce qui dispensera les apports en engrais chimiques.

Par ailleurs, le procédé de culture peut s'appliquer également lors du repiquage ou de transplantation en pleine terre de végétaux tels que notamment plantes, fleurs, arbustes ou similaires, ce repiquage pouvant s'effectuer, soit avec les racines nues, soit avec les racines en mottes.

La mise en oeuvre du procédé de culture de la présente invention favorisera avantageusement la reprise du cycle nutritif des végétaux en amoindrissant voire même en supprimant le choc de transplantation.

En effet, selon les procédés de culture traditionnelle, lorsque l'on repique ou lorsque l'on transplante un sujet, on ameublit la terre préalablement puis on dispose les racines dans la terre.

A ce moment precis, il se passe un phénomène de greffe et l'humidité doit passer de la terre, vers la motte du végétal et/ou vers les racines.

On constate généralement que les radicelles repoussent puis s'accrochent à la terre, ce qui permet la reprise du cycle nutritif de la plante. Toutefois, ces différentes étapes prennent un temps suffisamment important ce qui, dans certains cas, fait jaunir les feuilles, et voire même, mourir les sujets repiqués ou transplantés.

A l'inverse des procédés traditionnels, le procédé de culture de la présente invention autorise une reprise du cycle nutritif des végétaux immédiatement, pour ce, on procède de la manière suivante :

- à l'endroit où le repiquage ou la transplantation doit s'effectuer, on creuse un trou adapté à la motte ou aux racines du sujet,

- on répartit dans le fond du dit trou une couche du dit support de culture complexe organique aéré et homogène,

- on place les radicelles inférieures ou les racines mises à nu directement en contact de la dite couche de support de culture complexe organique,

- on rebouche le dit trou.

0232669

Il est à remarquer que pour faciliter le contact direct entre les radicelles et le support de culture complexe, on émiettera avantageusement la motte pour mettre à nu les radicelles puis on les palissera et on les mettra en contact avec la couche de mélange.

Dans le cas des transplantations d'arbres à racines nues, on effectuera avantageusement, à l'aide du support complexe de la présente invention, un pralinage.

Il est à remarquer que l'on a obtenu de bons résultats lors de transplantations de végétaux de pépinières en utilisant 1 à 3 litres de mélange du complexe organique aéré et homogène répartit dans le fond du trou convenablement dimensionné selon les méthodes habituelles.

Par ailleurs, la présente invention vise également un procédé de culture de légumes, communément appelés "légumes blancs", c'est-à-dire des légumes qui sont développés dans l'obscurité pour qu'il n'y ait pas de synthèse chlorophyllienne, c'est le cas notamment des endives, des pissenlits et des asperges.

La figure 1 représente un type d'installation qui permet la mise en oeuvre du procédé. Toutefois, d'autres installations, à la portée de l'Homme de l'Art, pourraient être utilisées sans pour cela sortir du cadre de l'invention.

Rappelons qu'il est connu de cultiver de tels légumes dans des salles fermées, obscures et tempérées, selon les besoins spécifiques de chaque légume. Particulièrement, on utilise un procédé dit procédé de culture hydroponique qui consiste à forcer la maturation des racines des légumes en salles en faisant développer les racines placées verticalement dans des bacs dans lesquels circule un liquide nutritif comportant au moins un engrais chimique.

Pour avoir une culture efficace par ce procédé hydroponique, il faut renouveler périodiquement et fréquemment l'ensemble du liquide nutritif utilisé. Ce type de culture n'est pas sans poser certains problèmes de pollution et de rentabilité.

Un des avantages du procédé de la présente invention réside dans le fait qu'il présente les moyens nécessaires au développement des radicelles et par conséquent du légume, c'est-à-dire alimentation en engrais organique et en eau naturelle, tout en autorisant une bonne oxygénation des racines évitant ainsi le pourrissement, sans pour cela, avoir recours au procédé hydroponique traditionnel.

De plus, on utilise des moyens naturels tout en autorisant des rendements de qualité de production équivalents voire même supérieurs.

Selon la présente invention, on utilise un support de culture complexe organique aéré et homogène, substantiellement solide, que l'on arrose temporairement avec de l'eau naturelle.

Plus précisément, on force la maturation de racines de légumes blancs en salles fermées, obscures et tempérées en faisant développer les racines 1, placées verticalement dans des bacs 2 équipés notamment de moyens d'arrosages contrôlés 3, en procédant essentiellement de la façon suivante :

- on constitue un milieu de culture en repartissant dans le fond des bacs 2 le dit support de culture 4 complexe organique aere et homogene tel que décrit précédemment, les extremités inférieures 5 des racines étant alors placées en contact avec le dit support de culture 4,

- on maintient le support de culture 4 humide, sans toutefois l'amener à saturation d'eau, par arrosages temporaires périodiques et contrôles, notamment par l'intermédiaire des moyens d'arrosages controlés 3, avec de l'eau naturelle tempérée durant tout le cycle de maturation.

Plus précisément, pour obtenir de bons résultats tant sur le plan qualité que sur le plan économique, on repartit avantageusement de 10 à 50 litres de support de culture 4 organique ainsi constitué par mètre carré de culture forcée.

Néanmoins, il pourrait être reparti des quantités inférieures mais alors on amoindrirait la qualité obtenue, ou une quantité supérieure qui serait alors préjudiciable pour le cout de revient. En effet, il faut juste disposer la quantité de support de culture complexe suffisante pour qu'il puisse nourrir la racine favorablement pendant tout le cycle de maturation, sans pour cela être excessif. Cette quantité sera donc variable selon les besoins des légumes cultivés.

A titre d'exemple, pour la culture des endives dans des bacs de 1,2 $m^2$ de superficie, on répartira 15 à 60 litres ce qui donnera une couche de support de culture sensiblement comprise entre 1 cm et 5 cm.

Par ailleurs, il est à remarquer que les différents

0232669

-11-

composants entrant dans le support complexe de culture sont de par leur fabrication préalablement desséchés. Lors du malaxage, les différents déchets de végétaux pourront être malaxés à l'état déshydraté, mais par contre, lors de l'apport de l'amendement organique, il sera avantageux de rendre le lombricompost légèrement humide pour favoriser sa fixation sur les particules des autres matériaux constituant le support. Cette remarque est applicable dans tous les types de cultures.

De plus, lors de la culture des légumes blancs, il sera nécessaire de maintenir le support de culture humide à un taux d'humidité compris entre 40 et 70 %, d'une part pour alimenter en eau naturelle les racines, et d'autre part pour rendre actif le lombricompost.

Toutefois, il est à remarquer qu'il est indispensable de ne pas amener le support de culture à saturation d'eau car à ce moment là il y aurait un effet néfaste sur le développement des radicelles et sur l'oxygénation des racines. A cet égard, dans la partie inférieure des bacs 2, on pourra prévoir des orifices 6 qui permettront d'évacuer un éventuel surplus d'eau.

Par exemple, dans le cas de la culture d'endives, après avoir réparti le support de culture 4 de la présente invention dans les bacs 2, puis disposé l'extrémité inférieure 5 des racines 1 en contact avec ce support 4, on humidifie le support de culture à un taux d'humidité sensiblement voisin de 50 % et on introduit les bacs dans la salle de forçage qui sera tempérée à une température comprise entre 7 et 22 degrés.

Il est à remarquer qu'il est intéressant d'arroser le mélange avec de l'eau naturelle dont la température est légèrement supérieure, environ 2 degrés, à la température ambiante de la salle ceci pour favoriser la création d'un climat dit estival au niveau des radicelles et hivernal au niveau du légume.

Ensuite, après 4 à 5 jours sans arrosage, on arrose une seconde fois avec de l'eau naturelle pour maintenir l'humidité du support à une valeur sensiblement voisine de 50 %. En effet, après 4 jours les radicelles commencent à se former, elles absorbent et se nourrissent en éléments nutritifs dans le support de culture.

Puis, les arrosages se font périodiquement tous les deux à trois jours selon les variétés et les conditions hygrométriques de la

0232669

-12-

salle de forçage pour maintenir le support de culture humide sans toutefois aller à saturation d'eau.

Néanmoins, comme il vient d'être décrit, les arrosages sont assez espacés, on pourrait envisager de faire des arrosages plus rapprochés mais avec des quantités d'eau naturelle plus faibles.

Par ailleurs, au lieu de répartir le support complexe de l'invention dans le fond des bacs, comme décrit précédemment, on pourrait imaginer de planter chaque racine dans de petits pots unitaires remplis de la même façon avec le support complexe; ces pots individuels étant alors disposés par exemple dans le dit bac et soumis aux arrosages temporaires périodiques et contrôlés d'eau naturelle. Ceci sera avantageux quand il sera possible de récupérer les racines après la récolte, c'est notamment le cas des griffes d'asperges.

Naturellement, d'autres mises en oeuvre de la présente invention auraient pu être envisagées sans pour autant sortir du cadre de celle-ci. Particulièrement, dans le dosage de l'amendement organique, des quantités beaucoup plus importantes de lombricompost pourraient être utilisées car étant donné qu'il s'agit d'un engrais organique naturel, il ne brûle pas les racines, ni les radicelles. Ceci n'est pas le cas pour les engrais chimiques traditionnellement utilisés.

De même, il pourrait être envisagé d'utiliser d'autres amendements organiques tels que le lombricompost si toutefois ceux-ci présentent des caractéristiques voisines de celles précitées.

En ce qui concerne les procédés de culture, il est à remarquer qu'on pourrait également utiliser avantageusement le support de culture complexe pour remplir des bacs contenant, soit des plantes d'appartement, soit des petits arbustes divers d'ornement de balcons et pour tous types de culture hors sol.

0232669

REVENDICATIONS

1. Support de culture complexe, notamment destiné, en tant que tel ou en amendement incorporé au sol, à la culture de plantes, fleurs, légumes, arbres fruitiers, arbres d'ornement, caractérisé par le fait qu'il se présente sous la forme d'un complexe organique aéré et homogène, constitué à partir d'un mélange homogène de déchets de végétaux non fertilisés et d'un amendement fertilisant organique tel que le lombricompost.

2. Support de culture complexe selon la revendication 1, caractérisé par le fait qu'il est constitué par au moins un mélange homogène de tourbe blonde neutre et de lombricompost.

3. Support de culture complexe selon la revendication 1, caractérisé par le fait qu'il est constitué par au moins un mélange homogène de déchets résineux pulvérisés neutres et de lombricompost.

4. Support de culture complexe selon la revendication 1, caractérisé par le fait qu'il est constitué au moins par un mélange de tourbe blonde neutre et de déchets résineux pulvérisés neutres et de lombricompost.

5. Support de culture complexe selon l'une quelconque des revendications 2, 3 ou 4, caractérisé par le fait qu'il comporte en outre de la tourbe brune neutre et/ou du terreau neutre.

6. Support de culture complexe selon la revendication 1, caractérisé par le fait que le dit amendement fertilisant est formé par un volume de deux à sept litres de lombricompost pour un mélange total de 25 litres.

7. Support de culture complexe selon la revendication 1, caractérisé par le fait qu'il est composé, pour un mélange total de 25 litres, à partir de :
- 10 à 23 litres de tourbe blonde neutre,
- 0 à 5 litres de tourbe brune neutre,
- 0 à 5 litres de déchets résineux neutres,
- 0 à 5 litres de terreau neutre,
- 2 à 7 litres de lombricompost.

8. Procédé de culture, mettant en oeuvre le support de culture complexe selon la revendication 1, caractérisé par le fait que :
- on constitue un milieu de culture, au moins en partie, à partir du dit support de culture,

- on répartit au moins les extrémités inférieures des racines des produits à cultiver en contact avec le dit support de culture,

- on maintient le support de culture humide, par arrosages temporaires périodiques et contrôlés avec de l'eau naturelle.

9. Procédé de culture selon la revendication 8, notamment destiné au développement de légumes, dits "produits blancs" tels que des endives, pissenlits, asperges, par lequel on force la maturation de racines des légumes en salles fermées, obscures et tempérées, en faisant développer les racines (1) placées verticalement dans des bacs (2) équipés de moyens d'arrosage contrôlés (3), caractérisé par le fait que :

- on constitue le milieu de culture en répartissant dans le fond des bacs (2) le dit support de culture complexe organique aéré et homogène, les extrémités inférieures (5) des racines étant alors placées en contact avec le dit support de culture (4),

- on maintient le support de culture (4) humide, sans l'amener à saturation d'eau, par arrosages temporaires périodiques et contrôlés avec de l'eau naturelle tempérée durant tout le cycle de maturation.

10. Procédé de culture selon la revendication 9, caractérisé par le fait que l'on répartit de 10 à 50 litres de support de culture organique (4) par mètre carré de culture forcée et que l'on maintient le support de culture (4) humide à un taux d'humidité compris entre 40 et 70 %.

11. Procédé de culture selon la revendication 8, notamment destiné à favoriser la reprise du cycle nutritif de végétaux tels que plantes, fleurs, arbustes ou similaires, lors de leur repiquage ou de leur transplantation en pleine terre, caractérisé par le fait que :

- à l'endroit où le repiquage ou la transplantation doit s'effectuer, on creuse un trou adapté à la motte ou aux racines du sujet,

- on répartit dans le fond du dit trou une couche du dit support de culture complexe organique,

- on place les radicelles inférieures ou les racines mises à nu directement en contact avec la dite couche du support de culture complexe organique,

- on rebouche le dit trou.

Eau

**FIG.1**

**RAPPORT DE RECHERCHE EUROPEENNE**

Office européen
des brevets

0232669
Numéro de la demande

EP 86 44 0106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | BE-A- 821 610 (ASSOCIATION FORET-CELLULOSE AFOCEL ) <br> * Page 2, lignes 1-9,32-40; page 3, lignes 7-20 * | 1-6,8, 9 | A 01 G 9/10 <br> C 05 F 11/04 <br> A 01 G 1/02 |
| A |  | 7 |  |
|  | --- |  |  |
| Y | BE-A- 902 387 (COMPTOIR GENERAL D'ECHANGE) <br> * Description * | 1-6,8, 9 |  |
| A |  | 7 |  |
|  | --- |  |  |
| Y | DE-A-2 015 173 (K. BERGWEILER) <br> * Revendications 1-3,6-8 * | 8,9 |  |
|  | --- |  | **DOMAINES TECHNIQUES RECHERCHES (Int. Cl.4)** |
| A | US-A-4 148 154 (J.H. KING) <br> * Colonne 2, ligne 64 - colonne 3, ligne 67; figure 2 * | 1-7 | A 01 G <br> C 05 F <br> A 01 K |
|  | --- |  |  |
| A | US-A-3 935 673 (S.R. ROBINS) <br> * Colonne 3, ligne 46 - colonne 4, ligne 45; figures 1,4 * | 8-10 |  |
|  | --- |  |  |
| A | US-A-3 372 018 (D.D. STOCKER) <br> * Revendication 1 * | 1-7 |  |
|  | ---      -/- |  |  |

Le présent rapport de recherche a été établi pour toutes les revendications

| Lieu de la recherche | Date d'achèvement de la recherche | Examinateur |
|---|---|---|
| LA HAYE | 13-03-1987 | HERYGERS J.J. |

CATEGORIE DES DOCUMENTS CITES

X : particulièrement pertinent à lui seul
Y : particuliérement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

RAPPORT DE RECHERCHE EUROPEENNE

0232669

Numéro de la demande

EP 86 44 0106

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 143 913 (FOLAB I KATRINEHOLM AB) <br> * Résumé * | 1 | |
| A | FR-A-2 160 513 (A/S TOTEN CELLULOSEFABRIK) <br> * Revendications 1-4 * | 11 | |

---

-----

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 13-03-1987 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82